# EUROPEAN PATENT SPECIFICATION

(11) **EP 3 113 442 B1**
(45) Date of publication and mention of the grant of the patent: **01.05.2019**
(21) Application number: 15382342.2
(22) Date of filing: 29.06.2015
(51) Int. Cl.: H04L 29/06, H04L 29/08

(54) **METHOD AND SERVER FOR IMPROVING QUALITY IN ADAPTIVE STREAMING DELIVERY SYSTEMS**
VERFAHREN UND SERVER ZUR VERBESSERUNG DER QUALITÄT IN ADAPTIVEN STREAMING-AUSGABESYSTEMEN
PROCÉDÉ ET SERVEUR POUR L'AMÉLIORATION DE LA QUALITÉ DANS DES SYSTÈMES DE DIFFUSION EN CONTINU ADAPTATIVE

(43) Date of publication of application: 04.01.2017
(73) Proprietor: Alcatel-Lucent España, 28050 Madrid (ES)
(72) Inventor: RUIZ ALONSO, Jaime, 28050 Madrid (ES); PEREZ GARCIA, Pablo, 28050 Madrid (ES); VILLEGAS NUÑEZ, Alvaro, 28050 Madrid (ES)
(74) Representative: Carpintero Lopez, Francisco

(56) References cited:
- EP-A1- 2 624 520
- WO-A1-2013/017165
- US-A1- 2011 082 924

## Description

### BACKGROUND OF THE INVENTION

### Technical field

The present invention relates to the delivery of multimedia contents (e.g., text, audio, video, software, etc., and any combination of them) which use an adaptive streaming format in communications networks. More particularly, the present invention relates to the optimization of delivery servers, improving delivery quality perceived by client devices, in adaptive streaming systems.

### Description of related art

Adaptive video streaming is a hybrid of progressive download and streaming. It is a concept using the existing HTTP (HyperText Transfer Protocol) protocol rather than creating a new one. In an implementation of an adaptive streaming solution the video is cut into many short fragments or segments and encoded at the wanted delivery format and rate. Therefore, multimedia content can be defined by means of one or more media segments.

In adaptive streaming systems, the client is who sends a HTTP GET request towards a server to retrieve a particular video segment. The adaptive part comes into play when the video is encoded at multiple bitrates or variants. This allows the client to switch, according to some rate-adaptation logic, between different variants each time it requests a new video segment. The client strives to achieve the best QoE (Quality of Experience) by displaying the highest achievable quality, providing a fast start-up, fast video seek and reducing skips, freezes and stutters. The rate adaptation and decision logic is typically based upon monitoring and estimation of related parameters such as:
- Available network resources (i.e. available bandwidth)
- Client Device capabilities (i.e. display resolution, available CPU)
- Current streaming conditions (i.e. playback buffer size)

Servers providing video fragments delivery for Adaptive Video Streaming usually deliver required video fragments to clients at maximum server speed, but limited by the TCP (Transport Control Protocol) windows. This makes that the times for average fragment delivery of the same file to different clients, and with different TCP client configuration, could be very different. Also, the times for average fragment delivery of the same file to the same client in networks with different latencies could be very different.

Before the client can start an adaptive video streaming session, the client device has to retrieve information about the video content and can adjust the requested bitrate to varying network conditions. Information such as available bitrates and segment duration is of importance so that the client can send GET requests to the server telling which video segment it wants. This information is stored at the server in a Manifest file.

The current Adaptive Video Streaming protocols support Manifests that are files which describe the available fragment qualities available for delivery. The Manifest file is the first thing the client asks for. The delivery servers let the client devices choose the selected quality from the ones listed in the requested Manifest. When clients start playing a video, the players always select the same quality, independently of the network conditions, then, if the network quality is not enough to deliver the fragment at enough speed, the client will ask for a second quality of lower bandwidth. But in this case, the user will experience delay in the video delivery.

Some of the existing Adaptive Video Streaming players such as HLS (HTTP Live Streaming) currently select firstly the quality listed in the Manifest as the first option. Then, in case the first fragment is not downloaded at enough speed, the delivery server will try a second fragment downloading with lower quality. Then a typical delay of several seconds is expected in the client device to present the first picture of the video.This is currently explained in detail by Apple in the iOS Develover Library ("Best Practices for Creating and Deploying HTTP Live Streaming Media for the iPhone and iPad", published on 2014-02-28, at https://developer.apple.com/library/ios/technotes/tn2224/_index.html#//apple _ref/doc/uid/DTS40009745-CH1-BITRATERECOMMENDATIONS)
This prior-art solution is not optimal because most of the potential client devices are currently playing video in networks, such as mobile networks or WiFi networks, without QoS (quality of service) guarantee. In these environments, a device that is watching video will always ask firstly for the quality first listed in the playlist and there can be two possible cases:
- If the first quality in the playlist is high, and the network quality is also high, when the video start playing, the quality will be good. But clients with not optimal network conditions (even using the same device) must wait for many seconds even in the case the second quality fragment is delivered quickly. And delay impacts on quality client perception.
- If the first quality in the playlist is low, all the clients will start asking firstly for a low quality video, then the perceived quality when video start will be low for all the clients.

US 2011/0082924 describes a technique for controlling the streaming of content, which involves editing the manifest file that id used to implement an HTTP adaptive bit rate streaming protocol.

EP 2624520 relates to a method for improving efficiency in adaptive streaming of multimedia content over a data network via HTTP, whereby a delivery infrastructure is adapted to provide the multimedia content at different representations with different data rates to at least one receiving side.

WO 2013/017165 describes a method for editing a description file to remove from it a reference to at least one version of media available for streaming. Therefore, there is a need of enabling servers to provide client devices with an alternative QoS selection from the Manifest files in order to improve the quality perceived by the clients, whichever the network scenario is.

### SUMMARY

In light of the present need for providing servers with a method for improving delivery quality in any Adaptive Streaming scenario which overcomes the aforementioned drawbacks, the present invention provides a delivery server with a method for customizing the qualities available for the client device, based on characteristics of said client device and on the network latency, in order to deliver firstly a quality that could be downloaded to the client in optimal conditions.

Some simplifications and omissions may be made in the following summary, which is intended to highlight and introduce some aspects of the various exemplary embodiments, but not to limit its scope. Detailed descriptions of preferred exemplary embodiments adequate to allow those of ordinary skill in the art to make and use the invention concepts will follow in later sections.

According to an aspect of the invention, a method of multimedia content delivering optimisation in adaptive streaming delivery systems is provided, as further defined in claim 1.

More particularly, in a preferred embodiment of the invention, the following information can be additionally taken into account:
- Server TCP window configuration
- Session priority (i.e.: High Priority, Medium Priority, ...)
- Session Class (i.e.: Best Class, Medium Class, ...)

Thus, the server personalizes the Manifest file including only the qualities available for this client session, instead of delivering a Manifest with all the supported qualities. The delivery server sends to the client a Manifest file with the subset of qualities that can be delivered to this particular client in the current network conditions.

According to another aspect of the invention a delivery server is provided, as further defined in claim 3.

Another aspect of the invention relates to a computer program product comprising computer-executable instructions for performing any of the steps of the method previously disclosed, when the program is run on a computer, as further defined in claim 5, and a digital data storage medium is also provided encoding a machine-executable program of instructions to perform any of the steps of the method previously disclosed, as further defined in claim 6.

These and other aspects of the invention will be apparent from and elucidated with reference to the embodiments described hereinafter.

The presented embodiments potentially have the following advantages when compared with the prior art:
- The present invention improves the perceived quality of the clients when the network conditions change.
- The present invention enhances the servers by optimazing the delivery quality of adaptive video streaming to TCP video devices and towards the TCP network.
- The servers implementing the present invention provide a better service in real deployment of massive Video Streaming Delivery Services, where occassional bursting requests could be generated randomly by many different reasons (netwok devices, network routers, network firewalls, OTT deployments), these servers being much more robust to other delivery servers that do not implement the proposed method.

### BRIEF DESCRIPTION OF THE DRAWINGS

Some embodiments of the method, system and device in accordance with embodiments of the present invention are now described, by way of example only, and with reference to the accompanying drawings, in which:
Figure 1 shows a server module for improving quality of multimedia content delivery by adaptating Manifests to two clients with the same client device but different RTT requirements, in a possible network scenario, according to a possible embodiment of the invention.
Figure 2 shows a server module for improving quality of multimedia content delivery by adaptating Manifests to two clients with the same kind of player using client devices assigned to different CWND requirements, in another possible network scenario, according to another possible embodiment of the invention.

Throughout the figures like reference numerals refer to like elements.

### DESCRIPTION OF EMBODIMENTS

The present inventions may be embodied in other specific devices, system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

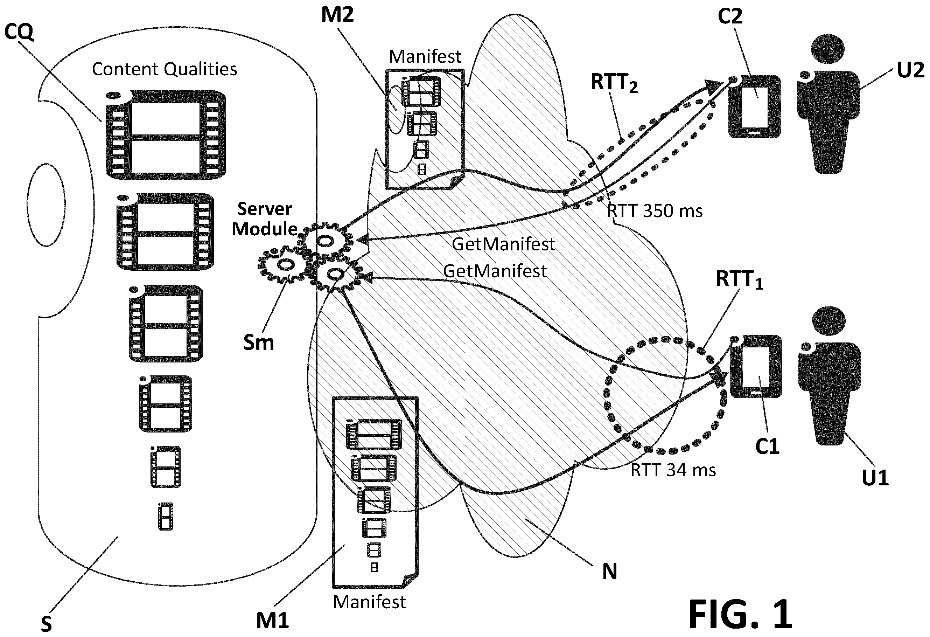

Figure 1 shows a possible embodiment of the invention, wherein a server (S) receives HTTP requests from client devices (C1, C2) of the same user or different users (U1, U2). These HTTP requests include a GetManifest to request a manifest file (M1, M2) which is modified by processing means of a server module (Sm) according to the specific RTT requirements from the client devices (C1, C2). In order to modify accordingly the manifest files (M1, M2) destined to the corresponding client devices (C1, C2), the following information is taken into account:
- The type of Client Device: in the example of Figure 1, the users (U1, U2) are Apple Players using iPad2 client devices (C1, C2).
- Client TCP window configuration: for both users (U1, U2) or Apple Players, the current congestion window has the same size; e.g., CWND = 10 segments.
- Network RTT: in this case, the value of this network latency parameter is different for each user (U1, U2); in the network scenario of Figure 1, the first player (U1) requires RTT₁ = 34 ms and the second player (U2) requires RTT₂ = 350 ms.
- Requested Manifest with all the content quality metrics (CQ) available in the server (S), i.e.: bitrates or variants at 64 Kbps, 110 Kbps, 200 Kbps, 350 Kbps, 550 Kbps, 900 Kbps and 1500 Kbps.

In the proposed case of Figure 1, a first modified Manifest file (M1) is delivered by the server (S) to the first player's client device (C1) with a first value of Network RTT₁ = 34 ms, including as selected available qualities for the current client session the variants at 64 Kbps, 110 Kbps, 200 Kbps, 350 Kbps, 550 Kbps, 900 Kbps and 1500 Kbps.

In this proposed case of Figure 1, the second modified Manifest file (M2), delivered by the server (S) to the second player's client device (C2) with a second value of Network RTT₂ = 350 ms specifies as available qualities for the current client session only the variants at 64 Kbps, 110 Kbps, 200 Kbps, 350 Kbps.

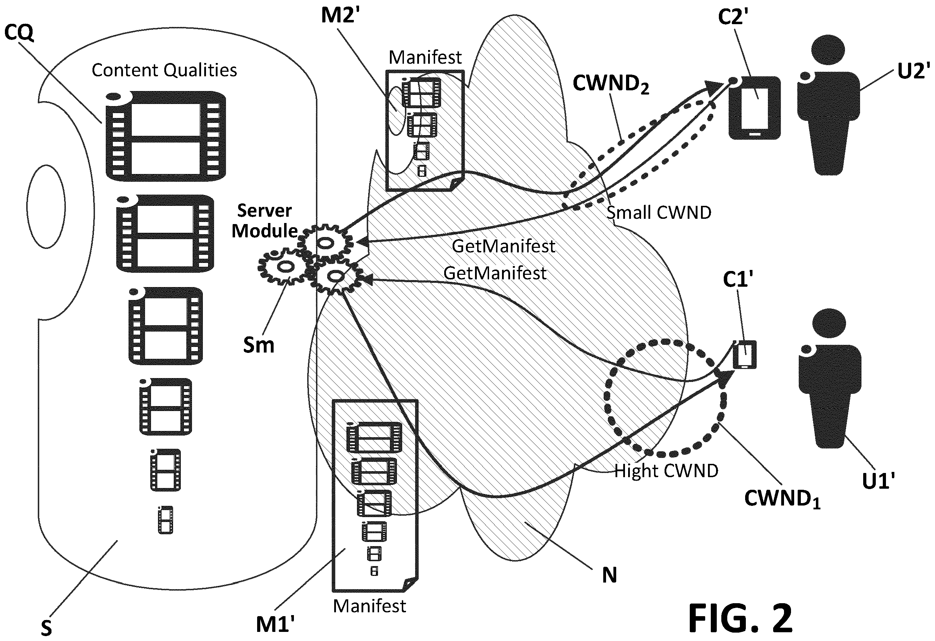

Another possible embodiment of the invention is shown in Figure 2. The Server (S) receives the HTTP request from a first client device (C1') of a first user (U1') and is a second client device (C2') of a second user (U2'), both being Apple Players. The Server module (Sm) takes into account the following information:
- Client device, in this example, Apple Player in iPad2 is the second client device (C2'), Apple Player in iPhone4s is the first client device (C1').
- Client TCP window configuration: an small current congestion window (CWND₂) for iPad2 (C2'), a high current congestion window (CWND₁) for iPhone4s (C1').

- Network RTT, which has the same value for both Apple players, e.g., 80 ms.
- Requested Manifest with all the available content quality metrics (CQ) e.g., variants at 64 Kbps, 110 Kbps, 200 Kbps, 350 Kbps, 550 Kbps, 900 Kbps and 1500 Kbps.

In this second proposed case, a modified Manifest (M2') is delivered by the Server (S) to the iPad2 (C2'), specifying as available selected qualities for the current client session, for example, the variants at 64 Kbps, 110 Kbps, 200 Kbps, 350 Kbps.

Also, in the proposed case of Figure 2, another modified Manifest (M1') is delivered by the Server (S) to the iPhone4S (C1'), specifying another subset of available qualities for the current client session: the variants at 64 Kbps, 110 Kbps, 200 Kbps, 350 Kbps, 550 Kbps, 900 Kbps and 1500 Kbps.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method for multimedia content delivering optimisation in adaptive streaming delivery systems, the method being performed by a server, comprising:
- receiving, through a network (N),at least a request from a client device (C1, C2, C1', C2') in a current client session, the request comprising a request of media segments and a request of a manifest file;
**characterised by** further comprising:
- retreiving a manifest file which contains a set of all the available values of content quality metrics (CQ) for adaptive streaming delivery,
- modifying the manifest file by selecting a subset of values of quality metrics only available for the current client session, based on the Client TCP window configuration, the Network Round Trip Time and the Client device type;
- delivering the modified manifest file (M1, M2, M1', M2') to the client device (C1, C2, C1', C2') within the current client session.

2. The method according to claim 1, wherein the subset of values of quality metrics available for the current client session is selected based additionally on any of the following information:
- Server TCP window configuration
- Session priority
- Session Class

3. A server (S) for improving quality of multimedia content delivery in an adaptive streaming network (N), comprising:
- means for receiving at least a request from a client device (C1, C2, C1', C2'), the request comprising a request of media segments and a request of a manifest file;
**characterised by** further comprising:
- retreiving means of a manifest file which contains a set of all the available values of content quality metrics (CQ) for adaptive streaming delivery,
- a server module (Sm) for modifying the manifest file by selecting a subset of values of quality metrics only available for the current client session, based on the Client TCP window configuration, the Network Round Trip Time and the Client device type;
- delivering means of the modified manifest file (M1, M2, M1', M2') to the client device (C1, C2, C1', C2') within the current client session.

4. The server (S) according to claim 3, which is a HTTP adaptive streaming server.

5. A computer program product comprising computer-executable instructions for performing the method according to any of the claims 1-2, when the program is run on a computer.

6. A digital data storage medium encoding a machine-executable program of instructions to perform a method according to any of the claims 1-2.

## Patentansprüche

1. Verfahren zur Optimierung der Bereitstellung von Multimedia-Inhalten in adaptiven Streaming-Bereitstellungssystemen, wobei das Verfahren von einem Server ausgeführt wird, umfassend:
- Empfangen zumindest einer Anfrage von einer Clientvorrichtung (C1, C2, C1', C2') in einer aktuellen Clientsitzung über ein Netzwerk (N), wobei die Anfrage eine Anfrage von Mediensegmenten und eine Anfrage einer Manifestdatei umfasst;
**dadurch gekennzeichnet, dass** dieses ferner umfasst:
- Abrufen einer Manifestdatei, die einen Satz aller verfügbaren Werte von Inhalts-Qualitätsmetriken (CQ) für die adaptive Streaming-Bereitstellung umfasst;
- Modifizieren der Manifestdatei durch Auswählen eines Teilsatzes von Werten der Qualitätsmetriken, die nur für die aktuelle Clientsitzung verfügbar sind, basierend auf der Client-TCP-Window-Konfiguration, der Network Round Trip Time und dem Client-Vorrichtungstyp;
- Bereitstellen der modifizierten Manifestdatei (M1, M2, M', M2") an die Clientvorrichtung (C1, C2, C1', C2') innerhalb der aktuellen Client-Sitzung.

2. Verfahren nach Anspruch 1, wobei der Teilsatz von Werten der Qualitätsmetriken, die für die aktuelle Client-Sitzung verfügbar sind, zusätzlich basierend auf einer der folgenden Informationen ausgewählt wird:
- einer Server-TCP-Window-Konfiguration
- einer Sitzungspriorität
- einer Sitzungsklasse

3. Server (S) zur Verbesserung der Qualität der Bereitstellung von Multimedia-Inhalten in einem adaptiven Streaming-Netzwerk (N), umfassend:
- eine Einrichtung zum Empfangen zumindest einer Anfrage von einer Clientvorrichtung (C1, C2, C1', C2'), wobei die Anfrage eine Anfrage von Mediensegmenten und eine Anfrage einer Manifestdatei umfasst;
**dadurch gekennzeichnet, dass** dieser ferner umfasst:
- eine Abrufeinrichtung einer Manifestdatei, die einen Satz aller verfügbaren Werte von Inhalts-Qualitätsmetriken (Content Quality Metrics) für die adaptive Streaming-Bereitstellung umfasst;
- ein Servermodul (Sm) zum Modifizieren der Manifestdatei durch Auswählen eines Teilsatzes von Werten von Qualitätsmetriken, die nur für die aktuelle Clientsitzung verfügbar sind, basierend auf der Client-TCP-Window-Konfiguration, der Network Round Trip Time und des Client-Vorrichtungstyps;
- eine Bereitstellungseinrichtung der modifizierten Manifestdatei (M1, M2, M1', M2') an die Clientvorrichtung (C1, C2, C1', C2') innerhalb der aktuellen Client-Sitzung.

4. Server (S) nach Anspruch 3, der ein adaptiver HTTP-Streaming-Server ist.

5. Computerprogrammprodukt, das computerausführbare Anweisungen zum Ausführen des Verfahrens nach einem der Ansprüche 1 bis 2 umfasst, wenn das Programm auf einem Computer ausgeführt wird.

6. Digitales Datenspeichermedium, das ein maschinenausführbares Programm von Anweisungen zum Ausführen eines Verfahrens nach einem der Ansprüche 1 bis 2 kodiert.

## Revendications

1. Procédé d'optimisation de distribution de contenu multimédia dans des systèmes de distribution par diffusion en continu adaptative, le procédé étant effectué par un serveur, comprenant le fait de :
- recevoir, via un réseau (N), au moins une requête d'un dispositif client (C1, C2, C1', C2') lors d'une session client en cours, la requête comprenant une requête de segments de média et une requête d'un fichier témoin ;
**caractérisé en ce qu'**il comprend en outre le fait de :
- récupérer un fichier témoin contenant un ensemble de toutes les valeurs disponibles de métrique de qualité de contenu (CQ) pour une distribution par diffusion en continu adaptative,
- modifier le fichier témoin en sélectionnant un sous-ensemble de valeurs de métrique de qualité uniquement disponibles pour la session client en cours, sur la base de la configuration de fenêtre Client TCP, du Temps Aller-Retour de Réseau et du type de dispositif Client ;
- transmettre le fichier témoin modifié (M1, M2, M1', M2') au dispositif client (C1, C2, C1', C2') pendant la session client en cours.

2. Procédé selon la revendication 1, dans lequel le sous-ensemble de valeurs de métrique de qualité disponibles pour la session client en cours est sélectionné en outre sur la base de l'une quelconque des informations suivantes :
- Configuration de fenêtre TCP de serveur
- Priorité de session
- Classe de Session.

3. Serveur (S) pour améliorer une qualité de distribution de contenu multimédia dans un réseau de diffusion en continu adaptative (N), comprenant :
- des moyens pour recevoir au moins une requête d'un dispositif client (C1, C2, C1', C2'), la requête comprenant une requête de segments de média et une requête d'un fichier témoin ;
**caractérisé en ce qu'**il comprend en outre :
- des moyens de récupération d'un fichier témoin contenant un ensemble de toutes les valeurs disponibles de métrique de qualité de contenu (CQ) pour une distribution par diffusion en continu adaptative,
- un module serveur (Sm) pour modifier le fichier témoin en sélectionnant un sous-ensemble de valeurs de métrique de qualité uniquement disponibles pour la session client en cours, sur la base de la configuration de la fenêtre Client TCP, du Temps Aller-Retour de Réseau et du type de dispositif Client ;
- des moyens de distribution du fichier témoin modifié (M1, M2, M1', M2') au dispositif client (C1, C2, C1', C2') pendant la session client en cours.

4. Serveur (S) selon la revendication 3, qui est un serveur de diffusion en continu adaptative HTTP.

5. Produit de programme informatique comprenant des instructions exécutables par ordinateur pour effectuer le procédé selon l'une quelconque des revendications 1 et 2, lorsque le programme est exécuté sur un ordinateur.

6. Support de stockage de données numériques codant un programme d'instructions exécutable par machine pour effectuer un procédé selon l'une quelconque des revendications 1 et 2.
